# EUROPEAN PATENT APPLICATION

(11) **EP 4 827 096 A1**
(43) Date of publication of application: **21.10.2026**
(21) Application number: 24902001.7
(22) Date of filing: 11.05.2024
(51) Int. Cl.: H04N 21/2662, H04N 19/146, H04N 21/238, H04N 21/24

(54) **CODE RATE ADJUSTMENT METHOD AND APPARATUS, AND ELECTRONIC DEVICE AND STORAGE MEDIUM**

(30) Priority: 15.12.2023 CN 202311738488
(71) Applicant: Zhejiang Uniview Technologies Co., Ltd., Hangzhou, Zhejiang 310051 (CN)
(72) Inventor: ZHENG, Qinrun, Hangzhou, Zhejiang 310051 (CN); LU, Tiande, Hangzhou, Zhejiang 310051 (CN)
(74) Representative: De Ros, Alberto
(86) International application number: PCT/CN2024/092593
(87) International publication number: WO 2025/123571

(57) **Abstract**

The present application relates to the technical field of videos. Provided are a code rate adjustment method and apparatus and an electronic device and a storage medium. The method comprises: in the case of a dynamic picture. acquiring a first data-sending rate sent by a receiving-end device: on the basis of the data volume of dynamic-picture I frames and the data volume of a first preset number of dynamic-picture P frames that follow the current dynamic -picture I frames, determining a dynamic average data-generation rate; and when the dynamic average data-generation rate is less than or equal to a second preset multiple of the first data-sending rate. Determining a first target code rate on the basis of a first cache duration, wherein the first cache duration is equal to the difference value between a first current moment and a moment at which first current cache data is written into a cache region, the first current cache data is the remaining live data when first live data generated on the basis of the current code rate is sent to the receiving-end device and the first target code rate is used for generating new live data.

## Description

### CROSS-REFERENCES TO RELATED APPLICATIONS

The present application claims priority to the Chinese patent application No. 2023117384883 filed on December 15, 2023, entitled "Code Rate Adjustment Method and Apparatus, and Electronic Device and Storage Medium", which is incorporated herein by reference in its entirety.

### FIELD

The present application relates to the field of video technologies, and in particular, to a bit rate adjustment method, an apparatus, an electronic device, and a storage medium.

### BACKGROUND

In wide area network interactions, various network impairments exist, such as network delay, network packet loss, or bandwidth limitations, and these network impairments lead to a decrease in data transmission capability. Especially in surveillance video services, insufficient data transmission capability may lead to a situation where live video stutters or latency increases.

When video stuttering or increased delay occurs, a user usually manually modifies the video definition, such as switching from ultra-high-definition to high-definition, or from high-definition to standard-definition, to try to restore smooth playback of the video using a lower gear of image quality.

### BRIEF SUMMARY

The present application provides a bit rate adjustment method, an apparatus, an electronic device, and a storage medium.

A bit rate adjustment method is provided according to the present application, including:
obtaining a first transmission data rate transmitted by a receiving end device in case of a dynamic picture; where the first transmission data rate is determined by the receiving end device based on data volume of a received current dynamic picture I-frame and a first receiving duration corresponding to the current dynamic picture I-frame;
determining a dynamic average generation data rate based on the data volume of the dynamic picture I-frame and data volume of a first preset number of dynamic picture P-frames following the current dynamic picture I-frame; and
determining a first target bit rate based on a first buffered duration, in case that the dynamic average generation data rate is less than or equal to a second preset number of times the first transmission data rate; where the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

A bit rate adjustment apparatus is also provided according to the present application, including:
a first obtaining unit, configured to obtain a first transmission data rate transmitted by a receiving end device in case of a dynamic picture; where the first transmission data rate is determined by the receiving end device based on data volume of a received current dynamic picture I-frame and a first receiving duration corresponding to the current dynamic picture I-frame;
a first determining unit, configured to determine a dynamic average generation data rate based on the data volume of the dynamic picture I-frame and data volume of a first preset number of dynamic picture P-frames following the current dynamic picture I-frame; and
a second determining unit, configured to determine a first target bit rate based on a first buffered duration, in case that the dynamic average generation data rate is less than or equal to a second preset number of times the first transmission data rate; where the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

An electronic device is also provided according to the present application, including a memory, a processor, and a computer program stored in the memory and executed in the processor, where the processor implements any of bit rate adjustment methods described above when executing the computer program.

A computer-readable storage medium is also provided according to the present application, storing a computer program, where the computer program implements any of bit rate adjustment methods described above when executed by a processor.

A computer program product is also provided according to the present application, including a computer program, where the computer program implements any of bit rate adjustment methods described above when executed by a processor.

According to the bit rate adjustment method, apparatus, electronic device, and storage medium provided by the present application, a dynamic average generation data rate is determined based on data volume of a dynamic picture I-frame and data volume of a first preset number of dynamic picture P-frames following a current dynamic picture I-frame in case that a video picture is a dynamic picture; a first target bit rate is determined based on a first buffered duration in case that the dynamic average generation data rate is less than or equal to a second preset number of times a first transmission data rate; and new live data is generated using the re-determined first target bit rate, so that a generation rate of the new live data matches a current network environment of a receiving end device.

### BRIEF DESCRIPTION OF THE DRAWINGS

The following section introduces the accompanying drawings utilized in the description of the embodiments. The drawings referred to in the subsequent description illustrate various embodiments of the present application; those skilled in the art may derive other drawings based on these illustrations without the exercise of inventive effort.
FIG. 1 is a first schematic flowchart of a bit rate adjustment method according to an embodiment of the present application;
FIG. 2 is a second schematic flowchart of a bit rate adjustment method according to an embodiment of the present application;
FIG. 3 is a third schematic flowchart of a bit rate adjustment method according to an embodiment of the present application;
FIG. 4 is an overall schematic flowchart of a bit rate adjustment method for a dynamic picture according to an embodiment of the present application;
FIG. 5 is an overall schematic flowchart of a bit rate adjustment method for a static picture according to an embodiment of the present application;
FIG. 6 is a schematic structural diagram of a bit rate adjustment apparatus according to an embodiment of the present application; and
FIG. 7 is a schematic physical structural diagram of an electronic device according to an embodiment of the present application.

### DETAILED DESCRIPTION

The solutions in the present application will be described below in conjunction with the accompanying drawings in the present application. The described embodiments are only part of the embodiments of the present application, but not all of the embodiments.

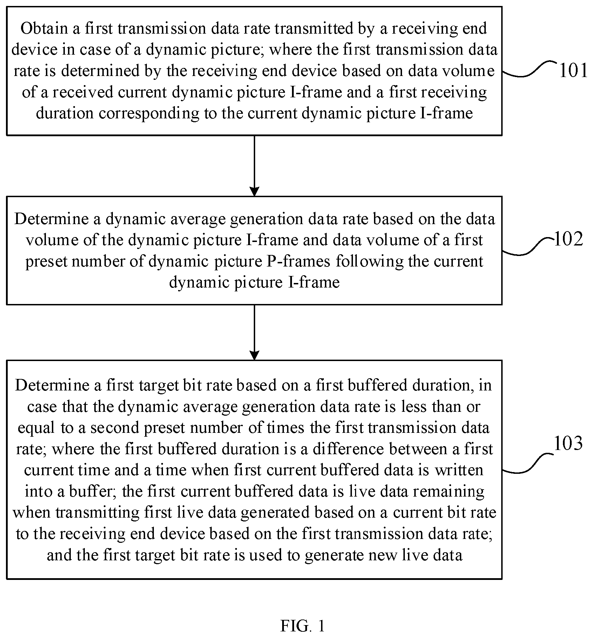

The bit rate adjustment method of the present application is described below in conjunction with FIG. 1 to FIG. 5. An execution subject of the bit rate adjustment method may be an electronic device such as a camera device that monitors a live environment, or may be a bit rate adjustment apparatus provided in the electronic device, and the bit rate adjustment apparatus may be implemented by software, hardware, or a combination of both.

FIG. 1 is a first schematic flowchart of a bit rate adjustment method according to an embodiment of the present application. As shown in FIG. 1, the bit rate adjustment method includes the following steps.

Step 101: Obtain a first transmission data rate transmitted by a receiving end device in case of a dynamic picture; where the first transmission data rate is determined by the receiving end device based on data volume of a received current dynamic picture I-frame and a first receiving duration corresponding to the current dynamic picture I-frame.

In an embodiment, the dynamic picture refers to a picture containing dynamic elements, and the dynamic picture is composed of multiple frames of static pictures. The current dynamic picture I-frame refers to a complete dynamic picture I-frame currently received by the receiving end device, the data volume of the current dynamic picture I-frame refers to the number of bytes occupied by encoding the current dynamic picture I-frame, and the first receiving duration is a duration required by the receiving end device from starting to receive the current dynamic picture I-frame to completing the reception of the current dynamic picture I-frame.

In an embodiment, for a dynamic picture, the receiving end device can calculate and obtain a first transmission data rate by dividing the data volume of the received complete current dynamic picture I-frame by the first receiving duration, where the first transmission data rate is used to characterize the transmission capability of a current link. The receiving end device feeds back the first transmission data rate to a camera device, so that the camera device obtains the first transmission data rate. For example, the data volume of the complete current dynamic picture I-frame is represented by *Data_{DynamicI},* the first receiving duration is represented by Δ*t*_{1 *Received_ I frame*}, and the first transmission data rate ${V}_{Send 1} = \frac{{Data}_{DynamicI}}{Δ {t}_{1 Received _ I frame}}$.

Step 102: Determine a dynamic average generation data rate based on the data volume of the dynamic picture I-frame and data volume of a first preset number of dynamic picture P-frames following the current dynamic picture I-frame.

In an embodiment, the dynamic picture is represented by the current dynamic picture I-frame and the first X dynamic picture P-frames following the current dynamic picture I-frame to predict subsequent data accumulation conditions, where X is the first preset number. For example, the data volume of the dynamic picture P-frames *Data_{DynamicP}* is represented by the average data volume of the first X dynamic picture P-frames. That is, *Data_{DynamicP} =* (*Data*_{*DynamicP*1} *+* ··· *+ Data_{DynamicPX}* )/*X . Data*_{*DynamicP*1} represents the first dynamic picture P-frame among the X dynamic picture P-frames, and *Data_{DynamicPX}* represents the X-th dynamic picture P-frame among the X dynamic picture P-frames. The data volume of the dynamic picture I-frame can be the number of bytes occupied by encoding the first dynamic picture I-frame. The data volume of the dynamic picture I-frame can be represented by *Data_{DynamicI},* and the dynamic average generation data rate ${V}_{Dynamic} = \frac{{Data}_{DynamicI} + \left(GOP-1\right) ∗ {Data}_{DynamicP}}{Gop / Frame}$ , where *GOP* represents an I-frame interval, and *Frame* represents a frame rate.

Step 103: Determine a first target bit rate based on a first buffered duration, in case that the dynamic average generation data rate is less than or equal to a second preset number of times the first transmission data rate; where the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

For example, upon obtaining the dynamic average generation data rate *V_{Dynamic}* and the first transmission data rate *V*_{*Send*1}, assuming that the second preset number is N, where *N* ∈ (1, +*∞*). *V_{Dynamic}* is compared with *N* * *V*_{*Send*1}. In case that *V_{Dynamic}* ≤ *N* * *V*_{*Send*1}, it indicates that a current data accumulation speed is still within a short-term allowable range, and the current bit rate does not need to be adjusted. However, since it is uncertain how long the dynamic picture will last, continuous observation for a longer period of time is required. During the continuous observation period, both the duration of the dynamic picture and *V_{Dynamic}* are changing factors, but these changing factors are all reflected in the buffered duration of the buffered data in the buffer. The buffered duration is used to detect an accumulation condition of the buffered data in the buffer.

After generating the first live data based on the current bit rate, the camera device needs to transmit the first live data to the receiving end device based on the first transmission data rate. During the process of transmitting the first live data, when no reception success response returned by the receiving end device is received after a part of the live data has been transmitted, it is considered that the part of the live data is not successfully received by the receiving end device. At this time, the part of the live data needs to be buffered in the buffer, and the part of the live data is the first current buffered data; a difference between the first current time and a time when the first current buffered data is written into the buffer is determined as the first buffered duration, and thereby the current bit rate is adjusted based on a magnitude of the first buffered duration to obtain the first target bit rate, and the first target bit rate is used to generate new live data.

According to the bit rate adjustment method provided by the present application, in case that a video picture is a dynamic picture, a dynamic average generation data rate is determined based on data volume of a dynamic picture I-frame and data volume of a first preset number of dynamic picture P-frames following the current dynamic picture I-frame; in case that the dynamic average generation data rate is less than or equal to a second preset number of times a first transmission data rate, a first target bit rate is determined based on a first buffered duration, and new live data is generated using the re-determined first target bit rate, so that a generation rate of the new live data matches a current network environment of the receiving end device. In this way, when receiving the new live data, the receiving end device can play it in real-time, thereby improving the fluency of the receiving end device in playing the new live data, and achieving automatic adjustment of video fluency. In addition, since the generation rate of the new live data matches the current network environment of the receiving end device, it can be achieved that no live data is lost during transmission, and integrity of the live data can be guaranteed.

In an embodiment, the above Step 103 of determining the first target bit rate based on the first buffered duration can be implemented by the following manner:
increase the current bit rate to obtain the first target bit rate in case that a first preset condition is met;
where the first preset condition includes any of the following:
   condition 11: after generating the first live data of a first preset duration, the first buffered duration is less than a first delay threshold;
   condition 12: after generating the first live data of a first preset duration, the first buffered duration is less than a first delay threshold, and a difference between a current time and a time of a last decrease in bit rate is greater than a first preset threshold, the first preset threshold is used to characterize a duration for suppressing oscillatory switching of gears.
   condition 13: after generating the first live data of a first preset duration, the first buffered duration is greater than or equal to a first delay threshold, and after continuing to generate second live data of a second preset duration, a second buffered duration is less than a second delay threshold; where the first delay threshold is less than the second delay threshold, the second buffered duration is a difference between a second current time and a time when second current buffered data is written into the buffer, the second current buffered data is live data remaining when transmitting third live data to the receiving end device based on the first transmission data rate, and the third live data includes the second live data and the first current buffered data.
   condition 14: after generating the first live data of a first preset duration, the first buffered duration is greater than or equal to a first delay threshold, and after continuing to generate second live data of a second preset duration, a second buffered duration is less than a second delay threshold, and a difference between the current time and a time of a last decrease in bit rate is greater than the first preset threshold.

In an embodiment, regarding condition 11, in case that the dynamic average generation data rate is less than or equal to the second preset number of times the first transmission data rate, the first live data of a first preset duration T1 is generated. Assuming that T1 is 1s, that is, generating 1s of the first live data. When transmitting the first live data to the receiving end device, in case that only 950ms of live data among the first live data is transmitted, a first buffered duration corresponding to the first current buffered data is 50ms. A first delay threshold t_{Low_delay} is used to characterize a duration allowed for buffering by a low-delay network. Assuming that the first delay threshold t_{Low_delay} is 100ms, the first buffered duration of 50ms is less than the first delay threshold of 100ms, which indicates that buffered data volume is relatively small, and the current bit rate can be increased. For example, the bit rate can be increased by one gear, that is, upshifting gears on the basis of the current bit rate to obtain the first target bit rate.

In an embodiment, regarding condition 12, on the basis of condition 11, that is, when the first buffered duration is less than the first delay threshold after generating the first live data of the first preset duration, in order to avoid oscillatory switching of bit rate gears, a difference between the current time and a time of a last decrease in bit rate needs to be compared with a first preset threshold t_{Suppress,} the first preset threshold t_{Suppress} is used to characterize a duration for suppressing oscillatory switching of gears. In case that the difference between the current time and the time of the last decrease in bit rate is greater than the first preset threshold t_{Suppress}, it indicates that a relatively long time has passed since the downshifting of gears, and at this time, the bit rate can be increased by one gear, that is, upshifting gears on the basis of the current bit rate to obtain the first target bit rate. In case that the difference between the current time and the time of the last decrease in bit rate is less than or equal to the first preset threshold tₛᵤₚₚᵣₑₛₛ, it indicates that the time since downshifting gears is not long, and at this time, upshifting gears on the basis of the current bit rate is not allowed, to avoid oscillatory switching of gears.

In an embodiment, regarding condition 13, when the first buffered duration is greater than or equal to the first delay threshold after generating the first live data of the first preset duration, continuous observation is required, that is, continuing to generate second live data of a second preset duration T2 is required; assuming that T2 is 2s, that is, generating 2s of the second live data. When transmitting third live data (the second live data of 2s and the previously buffered first current buffered data of 50ms) to the receiving end device, in case that only 1900ms of live data among the 2050ms of third live data is transmitted, a second buffered duration corresponding to the second current buffered data is 150ms. A second delay threshold t_{High_delay} is used to characterize a duration allowed for buffering by a high-delay network, Assuming that the second delay threshold t_{High_delay} is 200ms, the second buffered duration of 150ms is less than the second delay threshold of 200ms, which indicates that the buffered data volume is relatively small, and the current bit rate can be increased. For example, the bit rate can be increased by one gear, that is, upshifting gears on the basis of the current bit rate to obtain the first target bit rate.

It should be noted that in practical applications, a plurality of different first delay thresholds and second delay thresholds can be set based on network demands, so that the gear adjustment of a bit stream matches the current network environment better, which is not limited by the present application.

In an embodiment, regarding condition 14, on the basis of condition 13, that is, when the first buffered duration is greater than or equal to the first delay threshold after generating the first live data of the first preset duration and when the second buffered duration is less than the second delay threshold after continuing to generate the second live data of the second preset duration, in order to avoid oscillatory switching of bit rate gears, a difference between the current time and a time of a last decrease in bit rate needs to be compared with the first preset threshold t_{Suppress.} In case that the difference between the current time and the time of the last decrease in bit rate is greater than the first preset threshold t_{Suppress}, it indicates that a relatively long time has passed since the downshifting of gears, and at this time, the bit rate can be increased by one gear, that is, upshifting gears on the basis of the current bit rate to obtain the first target bit rate. In case that the difference between the current time and the time of the last decrease in bit rate is less than or equal to the first preset threshold t_{Suppress}, it indicates that the time since downshifting gears is not long, and at this time, upshifting gears on the basis of the current bit rate is not allowed, to avoid oscillatory switching of gears.

In the embodiment, in case that the first preset condition is met, it indicates that a current network condition is relatively good, and the current bit rate can be rapidly increased, and new live data is generated based on the first target bit rate obtained after increasing the bit rate, so that a generation rate of the new live data matches a current network environment of the receiving end device. In this way, when receiving the new live data, the receiving end device can play it in real-time, thereby improving the fluency of the receiving end device in playing the new live data, and achieving automatic adjustment of video fluency. In addition, at a dynamic picture, setting a plurality of thresholds such as a first preset threshold, a first delay threshold, and a second delay threshold during an upshifting stage can simultaneously be compatible with both a low-delay network environment and a high-delay network environment. Moreover, at a dynamic picture, using only time to measure an accumulation condition of buffered data is closer to a user's judgment on picture delay, and can be compatible with both constant bit rate videos and variable bit rate videos.

In an embodiment, the above Step 103 of determining the first target bit rate based on the first buffered duration is further implemented by the following manner:
decrease the current bit rate to obtain the first target bit rate in case that the first buffered duration is greater than or equal to a first delay threshold after generating the first live data of a first preset duration, and a second buffered duration is greater than or equal to a second delay threshold after continuing to generate second live data of a second preset duration; where the first delay threshold is less than the second delay threshold, the second buffered duration is a difference between a second current time and a time when second current buffered data is written into the buffer, the second current buffered data is live data remaining when transmitting third live data to the receiving end device based on the first transmission data rate, and the third live data includes the second live data and the first current buffered data.

In an embodiment, when the first buffered duration is greater than or equal to the first delay threshold after generating the first live data of a first preset duration, continuous observation is required, that is, continuing to generate second live data of a second preset duration T2 is required. After continuing to generate the second live data of the second preset duration T2, assuming that T2 is 2s, that is, generating 2s of the second live data. When transmitting third live data (the second live data of 2s and the previously buffered first current buffered data of 50ms) to the receiving end device, in case that only 1800ms of live data among the 2050ms of third live data is transmitted, a second buffered duration corresponding to the second current buffered data is 250ms. A second delay threshold t_{High_delay} is used to characterize a duration allowed for buffering by a high-delay network. Assuming that the second delay threshold t_{High_delay} is 200ms, the second buffered duration of 250ms is greater than the second delay threshold of 200ms, which indicates that the buffered data volume is relatively large, and the current bit rate can be decreased. For example, the bit rate can be decreased by one gear, that is, downshifting gears on the basis of the current bit rate to obtain the first target bit rate.

In the embodiment, in case that the first buffered duration is greater than or equal to the first delay threshold after generating the first live data of a first preset duration, and a second buffered duration is greater than or equal to the second delay threshold after continuing to generate second live data of a second preset duration, it indicates that a current network condition is relatively poor, and the current bit rate can be rapidly decreased, and new live data is generated based on the first target bit rate obtained after decreasing the bit rate, so that a generation rate of the new live data matches a current network environment of the receiving end device. In this way, when receiving the new live data, the receiving end device can play it in real-time, thereby improving the fluency of the receiving end device in playing the new live data, and achieving automatic adjustment of video fluency.

In an embodiment, after decreasing the current bit rate to obtain the first target bit rate, the bit rate adjustment method further includes the following steps:
decrease the first target bit rate to obtain a second target bit rate in case that a second preset condition is met;
where the second preset condition includes any of the following:
   condition 21: a third buffered duration is greater than or equal to a second preset threshold; the second preset threshold is used to characterize a duration of severe network congestion, the third buffered duration is a difference between a third current time and a time when third current buffered data is written into the buffer, and the third current buffered data is live data remaining when transmitting the second current buffered data to the receiving end device based on the first transmission data rate;
   condition 22: a third buffered duration is less than the second preset threshold, the third buffered duration is greater than or equal to the second delay threshold, and after continuing to generate fourth live data of a third preset duration, a consumption speed of remaining buffered data in the buffer is less than a preset speed; the remaining buffered data is live data remaining when transmitting the fourth live data and historical buffered live data in the buffer to the receiving end device; where the second target bit rate is used to generate new live data.

In an embodiment, the preset speed can be represented by V_{Drop}, the preset speed V_{Drop} is an adjustable parameter, and the larger the value of V_{Drop}, the greater the sensitivity of downshifting gears.

In an embodiment, regarding condition 21, when decreasing the current bit rate to obtain the first target bit rate, data buffered in the buffer is the second current buffered data. When transmitting the second current buffered data in the buffer to the receiving end device, in case that only a part of live data among the second current buffered data is transmitted, for example, a second buffered duration corresponding to the second current buffered data is 3500ms, and only 100ms of live data among the second current buffered data is transmitted, a third buffered duration corresponding to the third current buffered data is 3400ms. A second preset threshold t_{Severe_congestion} is used to characterize a duration of severe network congestion. Assuming that the second preset threshold t_{Severe_congestion} is 3000ms, the third buffered duration of 3400ms is greater than the second preset threshold of 3000ms, which indicates that buffered data is severely accumulated in the buffer, and the current network environment suddenly becomes extremely poor. A logic of downshifting one gear at a time is not quite appropriate for current picture or network changes. At this time, the first target bit rate is decreased. For example, the bit rate can be decreased from the first target bit rate down to a lowest gear of bit rate to obtain the second target bit rate.

In an embodiment, regarding condition 22, for example, a second buffered duration corresponding to second current buffered data is 3500ms, and 2500ms of live data among the second current buffered data is transmitted, a third buffered duration corresponding to third current buffered data is 1000ms. Assuming that a second preset threshold t_{Severe_congestion} is 3000ms, the third buffered duration of 1000ms is less than the second preset threshold of 3000ms. At this time, the third buffered duration is compared with a second delay threshold t_{High_delay}. In case that the third buffered duration is greater than or equal to the second delay threshold t_{High_delay}, it indicates that an accumulation phenomenon occurs in buffered data within a buffer, and continuous observation is required to determine whether the buffered data within the buffer can be consumed in a timely manner at a bit rate of a current gear, that is, continuing to generate fourth live data of a third preset duration is required. The remaining buffered data in the buffer is obtained once within each I-frame interval duration cycle, and a consumption speed corresponding to the buffer is determined based on the remaining buffered data obtained a plurality of times. In case that the consumption speed is less than a preset speed, it indicates that the data within the buffer cannot be consumed in a timely manner, and at this time, a first target bit rate is decreased. For example, the bit rate can be decreased by one gear, that is, downshifting gears on the basis of the first target bit rate to obtain a second target bit rate. In case that the consumption speed is greater than or equal to the preset speed, it indicates that the data within the buffer can be consumed in a timely manner, and at this time, the first target bit rate is not adjusted.

In the embodiment, after downshifting gears, a downward trend of the accumulated buffered data in the buffer continues to be determined. In case that a preset downward trend is not met, it indicates that the buffered data is still accumulating or being consumed very slowly, and further downshifting of gears is required, that is, in case that a second preset condition is met, it indicates that a current network condition is relatively poor, the bit rate can be decreased again on the basis of the first target bit rate, and new live data is generated based on the obtained second target bit rate, so that a generation rate of the new live data matches a current network environment of a receiving end device. In this way, when receiving the new live data, the receiving end device can play it in real-time, thereby improving fluency of the receiving end device in playing the new live data, and achieving automatic adjustment of video fluency.

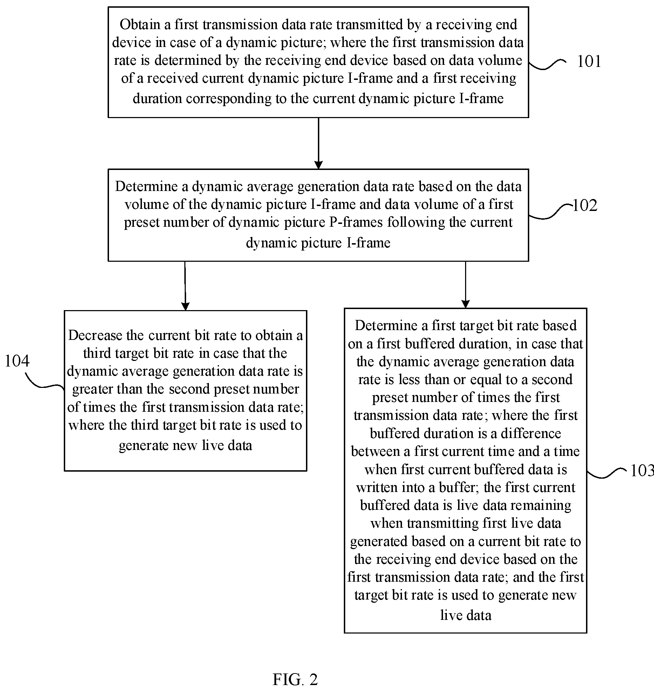

FIG. 2 is a second schematic flowchart of a bit rate adjustment method according to an embodiment of the present application. As shown in FIG. 2, the bit rate adjustment method further includes the following steps.

Step 104: Decrease the current bit rate to obtain a third target bit rate in case that the dynamic average generation data rate is greater than the second preset number of times the first transmission data rate; where the third target bit rate is used to generate new live data.

In an embodiment, in case that the dynamic average generation data rate is greater than the second preset number of times the first transmission data rate, that is, *V_{Dynamic}* > *N* * *V*_{*Send*1}, it indicates that a current data accumulation speed is relatively fast, and the current network environment is relatively poor, and the current bit rate can be decreased. For example, the bit rate can be decreased by one gear, that is, downshifting gears on the basis of the current bit rate to obtain the third target bit rate, where N is a constant, and the smaller the value of N, the higher a sensitivity of downshifting gears.

In the embodiment, in case that the dynamic average generation data rate is greater than the second preset number of times the first transmission data rate, the current bit rate is rapidly decreased, and new live data is generated based on the obtained third target bit rate, so that a generation rate of the new live data matches the current network environment of the receiving end device. In this way, when receiving the new live data, the receiving end device can play it in real-time, thereby improving fluency of the receiving end device in playing the new live data, and achieving automatic adjustment of video fluency.

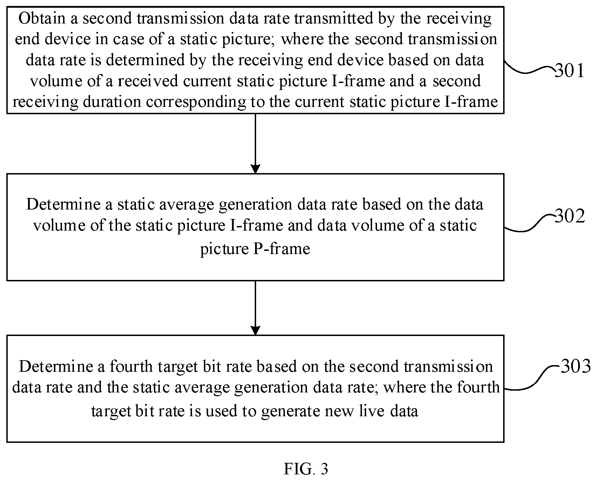

FIG. 3 is a third schematic flowchart of a bit rate adjustment method according to an embodiment of the present application. As shown in FIG. 3, the bit rate adjustment method further includes the following steps.

Step 301: Obtain a second transmission data rate transmitted by the receiving end device in case of a static picture; where the second transmission data rate is determined by the receiving end device based on data volume of a received current static picture I-frame and a second receiving duration corresponding to the current static picture I-frame.

In an embodiment, a static picture refers to an image without dynamic elements; the current static picture I-frame refers to a complete static picture I-frame currently received by the receiving end device, the data volume of the current static picture I-frame refers to the number of bytes occupied by encoding the current static picture I-frame, and the second receiving duration is a duration required by the receiving end device from starting to receive the current static picture I-frame to completing reception of the current static picture I-frame.

In an embodiment, for a static picture, the receiving end device can calculate the second transmission data rate by dividing the data volume of the received complete current static picture I-frame by the second receiving duration, where the second transmission data rate is used to characterize transmission capability of a current link. The receiving end device feeds back the second transmission data rate to a camera device, so that the camera device obtains the second transmission data rate. For example, the data volume of the complete current static picture I-frame is represented by *Data_{StaticI}*, and the first receiving duration is represented by Δ*t*_{2 *Received_I frame*}, the second transmission data rate ${V}_{Send 2} = \frac{{Data}_{StaticI}}{Δ {t}_{2 Received _ I frame}}$.

Step 302: Determine a static average generation data rate based on the data volume of the static picture I-frame and data volume of a static picture P-frame.

In an embodiment, for a static picture, data volume of each static picture I-frame and data volume of each static picture P-frame remains stable; therefore, subsequent packet transmission conditions can be predicted through previous samplings. The data volume of the static picture I-frame can be data volume of a first static picture I-frame or an average value of data volume of the first few static picture I-frames, and the data volume of the static picture I-frame can be represented by *Data_{StaticI}*; the data volume of the static picture P-frame can be data volume of a first static picture P-frame or an average value of data volume of the first few static picture P-frames, and the data volume of the static picture P-frame can be represented by *Data_{StaticP}*, the static average generation data rate ${V}_{Static} = \frac{{Data}_{StaticI} + \left(GOP-1\right) ∗ {Data}_{StaticP}}{Gop / Frame}$.

Step 303: Determine a fourth target bit rate based on the second transmission data rate and the static average generation data rate; where the fourth target bit rate is used to generate new live data.

In an embodiment, upon obtaining the static average generation data rate *V_{Static}* and the second transmission data rate *V*_{*Send*2}, whether the current bit rate needs to be adjusted can be determined by comparing the static average generation data rate *V_{Static}* with the second transmission data rate *V*_{*Send*2}. In case that it is determined that the current bit rate needs to be adjusted, the fourth target bit rate is obtained through upshifting or downshifting of the current bit rate; in case that it is determined that the current bit rate does not need to be adjusted, the fourth target bit rate is the current bit rate.

In the embodiment, for a static picture, a fourth target bit rate is automatically determined based on a second transmission data rate and a static average generation data rate, and new live data is generated based on the obtained fourth target bit rate, so that a generation rate of the new live data matches the current network environment of the receiving end device. In this way, when receiving the new live data, the receiving end device can play it in real-time, thereby improving fluency of the receiving end device in playing the new live data, and achieving automatic adjustment of video fluency.

In an embodiment, the above Step 107 of determining the fourth target bit rate based on the second transmission data rate and the static average generation data rate can be implemented by the following manner:
decrease the current bit rate to obtain the fourth target bit rate in case that the static average generation data rate is greater than the second transmission data rate.

In an embodiment, in case that the static average generation data rate *V_{Static}* is greater than the second transmission data rate *V*_{*Send*2}, that is, *V_{Static}* > *V*_{*Send*2}, it indicates that data will continuously accumulate under the current bit rate, and the current network environment is relatively poor, and downshifting of gears is required in a timely manner, that is, decreasing the current bit rate. For example, the bit rate can be decreased by one gear, that is, downshifting gears on the basis of the current bit rate to obtain the fourth target bit rate.

In the embodiment, in case that the static average generation data rate is greater than the second transmission data rate, it indicates that data will continuously accumulate under the current bit rate, and timely decrease of the current bit rate is required, achieving a rapid reduction of the current bit rate to adapt to a poor current network environment.

In an embodiment, the above Step 107 of determining the fourth target bit rate based on the second transmission data rate and the static average generation data rate can further be implemented in the following manner:
determine a target buffered duration based on a generation data rate of a static picture I-frame, a generation data rate of the static picture P-frame, and the second transmission data rate, in case that the static average generation data rate is less than or equal to the second transmission data rate, and the generation data rate of the static picture I-frame is greater than the second transmission data rate; and
transmit the target buffered duration to the receiving end device; where the target buffered duration is used to indicate the receiving end device to buffer live data within the target buffered duration.

In an embodiment, in case that the static average generation data rate *V_{Static}* is less than or equal to the second transmission data rate *V*_{*Send*2}, that is, *V_{Static}* ≤ *V*_{*Send*2}, a generation data rate *V_{StaticI}* of a static picture I-frame is calculated by ${V}_{StaticI} = \frac{{Data}_{StaticI}}{1 / Frame}$, and the generation data rate of the static picture I-frame *V_{StaticI}* is compared with the second transmission data rate *V*_{*Send*2}. In case that *V_{Static}* > *V*_{*Send*2}, it indicates that the overall generated data matches transmission capability of a link, but a stuttering phenomenon will occur at the receiving end device during transmission of the static picture I-frame. At this time, the receiving end device can be allowed to buffer data of a period of duration to guarantee overall fluency of live playback. The target buffered duration is t_{Client_buffer} is calculated by ${t}_{Client _ cache} = \frac{{V}_{StaticI} - {V}_{Send 2}}{{V}_{Send 2} - {V}_{Staticp}}$, and the calculated target buffered duration t_{Client_buffer} is transmitted to the receiving end device, and the receiving end device buffers live data of a corresponding duration according to the received target buffered duration t_{Client_buffer}.

In the embodiment, in case that the static average generation data rate is less than or equal to the second transmission data rate, and the generation data rate of the static picture I-frame is greater than the second transmission data rate, the receiving end device is controlled to buffer data of a target buffered duration to guarantee overall fluency of live playback, and meanwhile, each gear of bit rate has a corresponding definition, thereby further guaranteeing clarity of live playback.

In an embodiment, the above Step 107 of determining the fourth target bit rate based on the second transmission data rate and the static average generation data rate can further be implemented in the following manner:
increase the current bit rate to obtain the fourth target bit rate in case that a third preset condition is met;
where the third preset condition includes any of the following:
   condition 31: a generation data rate of the static picture I-frame is less than or equal to the second transmission data rate; or,
   condition 32: a generation data rate of the static picture I-frame is less than or equal to the second transmission data rate, and a difference between a current time and a time of a last decrease in bit rate is greater than a first preset threshold

In an embodiment, regarding condition 31, in case that the generation data rate of the static picture I-frame is less than or equal to the second transmission data rate *V*_{*Send*2}, that is, *V*_{*Static*1} ≤ *V*_{*Send*2}, it indicates that the current bit rate is lower than transmission capability of a link, and the current bit rate can be increased; for instance, the bit rate can be increased by one gear, that is, upshifting gears on the basis of the current bit rate to obtain the fourth target bit rate.

In the embodiment, in case that the third preset condition is met, it indicates that a current network condition is relatively good, the current bit rate can be increased, and new live data is generated based on the fourth target bit rate obtained after increasing the bit rate, so that a generation rate of the new live data matches the current network environment of the receiving end device. In this way, when receiving the new live data, the receiving end device can play it in real-time, thereby improving fluency of the receiving end device in playing the new live data, and achieving automatic adjustment of video fluency.

In an embodiment, at a beginning of stream-opening, a difference between a current stream-opening time and a last stream-closing time needs to be compared with a historical record valid duration t_{history_validity}. In case that the difference between the current stream-opening time and the last stream-closing time is less than the historical record valid duration t_{history_validity}, it indicates that a stream-opening interval is relatively short, and at this time, a bit rate corresponding to the last stream-closing time can be determined as the current bit rate. In case that the difference between the current stream-opening time and the last stream-closing time is greater than or equal to the historical record valid duration t_{history_validity}, it indicates that the stream-opening interval is relatively long, and at this time, a lowest gear of bit rate is determined as the current bit rate.

In the embodiment, in case that the difference between the current stream-opening time and the last stream-closing time is less than the historical record valid duration, a bit rate corresponding to the last stream-closing time is determined as the current bit rate, to avoid starting from a lowest gear of bit rate every time a stream is opened, and a process of pre-detecting an appropriate bit rate gear within a short time is eliminated, reducing calculation volume of bit rate adjustment.

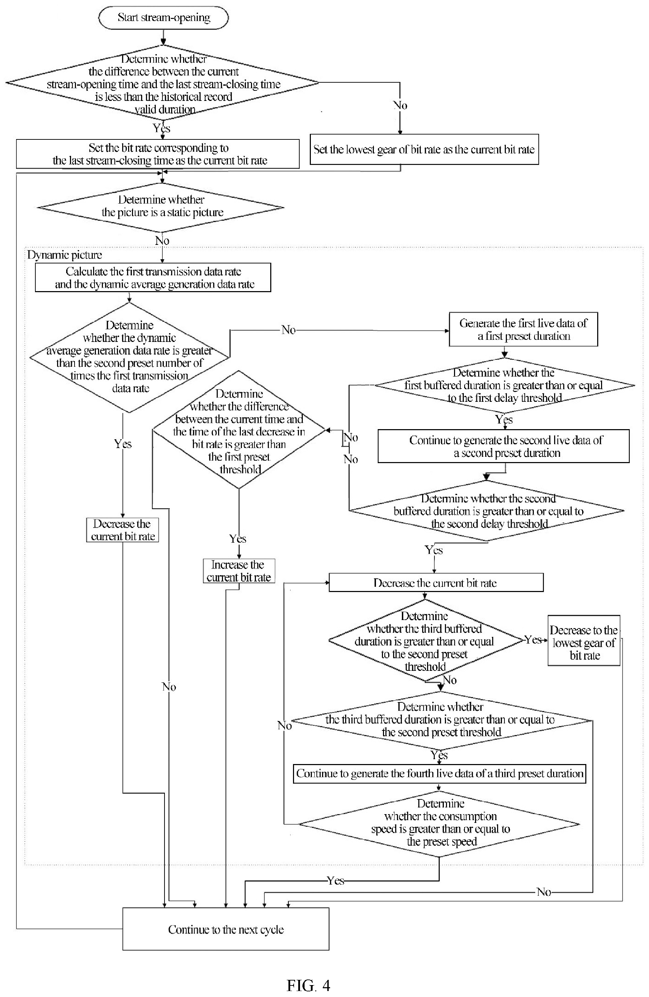

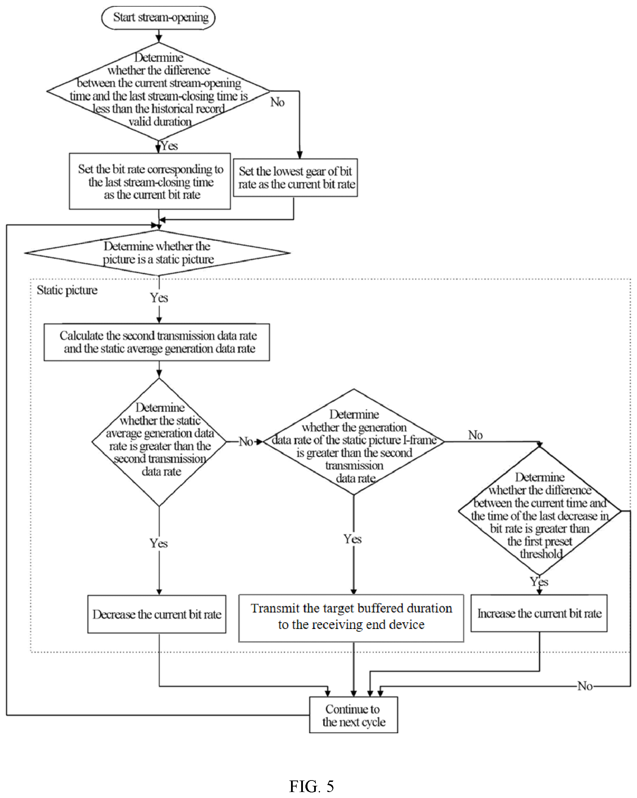

FIG. 4 is an overall schematic flowchart of a bit rate adjustment method for a dynamic picture according to an embodiment of the present application. FIG. 5 is an overall schematic flowchart of a bit rate adjustment method for a static picture according to an embodiment of the present application. As shown in FIG. 4 and FIG. 5, after starting stream-opening, whether a difference between a current stream-opening time and a last stream-closing time is less than a historical record valid duration is determined. In case that the difference between the current stream-opening time and the last stream-closing time is less than the historical record valid duration, a bit rate corresponding to the last stream-closing time is determined as a current bit rate corresponding to a current stream-opening; in case that the difference between the current stream-opening time and the last stream-closing time is greater than or equal to the historical record valid duration, a lowest gear of bit rate is determined as the current bit rate corresponding to the current stream-opening.

After stream-opening, whether a picture is a static picture is determined. In case of a dynamic picture, a first transmission data rate, data volume of a dynamic picture I-frame, and data volume of a first preset number of dynamic picture P-frames following a current dynamic picture I-frame are calculated; and a dynamic average generation data rate is determined based on the data volume of the dynamic picture I-frame and the data volume of the first preset number of dynamic picture P-frames following the current dynamic picture I-frame. In case that the dynamic average generation data rate is less than or equal to a second preset number of times the first transmission data rate, after generating first live data of a first preset duration, in case that a first buffered duration is less than a first delay threshold, and a difference between a current time and a time of a last decrease in bit rate is greater than a first preset threshold, the current bit rate is increased.

After generating the first live data of a first preset duration, the first buffered duration is greater than or equal to the first delay threshold, and after continuing to generate second live data of a second preset duration, when a second buffered duration is less than a second delay threshold, and a difference between the current time and a time of a last decrease in bit rate is greater than the first preset threshold, the current bit rate is increased.

After continuing to generate the second live data of a second preset duration, in case that the second buffered duration is greater than or equal to the second delay threshold, the current bit rate is decreased.

For example, when a third buffered duration is greater than or equal to a second preset threshold after decreasing the current bit rate, the bit rate continues to be decreased, and can be decreased to a lowest gear of bit rate.

In case that the third buffered duration is less than the second preset threshold, the third buffered duration is greater than or equal to the second delay threshold, and when a consumption speed of remaining buffered data in a buffer is less than a preset speed after continuing to generate fourth live data of a third preset duration, the bit rate continues to be decreased.

In case that the dynamic average generation data rate is greater than the second preset number of times the first transmission data rate, the current bit rate is decreased.

In case of a static picture, a second transmission data rate, data volume of a static picture I-frame, and data volume of a static picture P-frame are calculated; and a static average generation data rate is determined based on the data volume of the static picture I-frame and the data volume of the static picture P-frame. In case that the static average generation data rate is greater than the second transmission data rate, the current bit rate is decreased; in case that the static average generation data rate is less than or equal to the second transmission data rate, and a generation data rate of a static picture I-frame is greater than the second transmission data rate, a target buffered duration is transmitted to the receiving end device; in case that the generation data rate of the static picture I-frame is less than or equal to the second transmission data rate, and a difference between the current time and a time of a last decrease in bit rate is greater than a first preset threshold, the current bit rate is increased.

After execution of adjusting the current bit rate is completed, the process returns to the step of whether the picture is a static picture, and adaptive adjustment of a bit rate for a next cycle continues to be executed.

A bit rate adjustment apparatus provided by the present application is described below, and the bit rate adjustment apparatus described below and the bit rate adjustment method described above may correspond to each other for mutual reference.

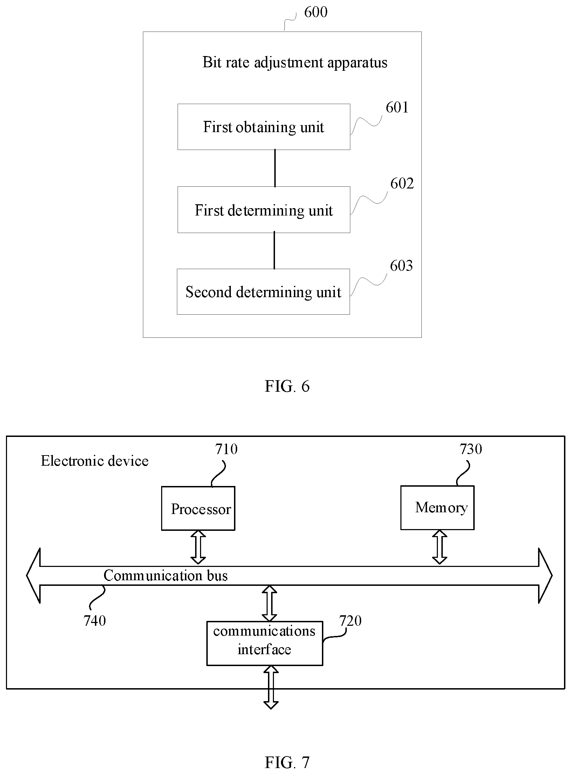

FIG. 6 is a schematic structural diagram of a bit rate adjustment apparatus according to an embodiment of the present application. As shown in FIG. 6, the apparatus 600 includes a first obtaining unit 601, a first determining unit 602 and a second determining unit 603;
where the first obtaining unit 601 is configured to obtain a first transmission data rate transmitted by a receiving end device in case of a dynamic picture; where the first transmission data rate is determined by the receiving end device based on data volume of a received current dynamic picture I-frame and a first receiving duration corresponding to the current dynamic picture I-frame;
the first determining unit 602 is configured to determine a dynamic average generation data rate based on the data volume of the dynamic picture I-frame and data volume of a first preset number of dynamic picture P-frames following the current dynamic picture I-frame; and
the second determining unit 603 is configured to determine a first target bit rate based on a first buffered duration, in case that the dynamic average generation data rate is less than or equal to a second preset number of times the first transmission data rate; where the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

According to the bit rate adjustment apparatus provided by the present application, a dynamic average generation data rate is determined based on data volume of a dynamic picture I-frame and data volume of a first preset number of dynamic picture P-frames following a current dynamic picture I-frame in case that a video picture is a dynamic picture; a first target bit rate is determined based on a first buffered duration in case that the dynamic average generation data rate is less than or equal to a second preset number of times a first transmission data rate; and new live data is generated using the re-determined first target bit rate, so that a generation rate of the new live data matches a current network environment of a receiving end device. When receiving the new live data, the receiving end device can play it in real-time, thereby improving fluency of the receiving end device in playing the new live data, and achieving automatic adjustment of video fluency.

In an embodiment, the second determining unit 603 is configured to:
increase the current bit rate to obtain the first target bit rate in case that a first preset condition is met;
where the first preset condition includes any of the following:
   after generating the first live data of a first preset duration, the first buffered duration is less than a first delay threshold;
   after generating the first live data of a first preset duration, the first buffered duration is less than a first delay threshold, and a difference between a current time and a time of a last decrease in bit rate is greater than a first preset threshold; the first preset threshold is used to characterize a duration for suppressing oscillatory switching of gears;
   after generating the first live data of a first preset duration, the first buffered duration is greater than or equal to a first delay threshold, and after continuing to generate second live data of a second preset duration, a second buffered duration is less than a second delay threshold; where the first delay threshold is less than the second delay threshold, the second buffered duration is a difference between a second current time and a time when second current buffered data is written into the buffer, the second current buffered data is live data remaining when transmitting third live data to the receiving end device based on the first transmission data rate, and the third live data includes the second live data and the first current buffered data; or
   after generating the first live data of a first preset duration, the first buffered duration is greater than or equal to a first delay threshold, and after continuing to generate second live data of a second preset duration, a second buffered duration is less than a second delay threshold, and a difference between the current time and a time of a last decrease in bit rate is greater than the first preset threshold.

In an embodiment, the second determining unit 603 is further configured to:
decrease the current bit rate to obtain the first target bit rate in case that the first buffered duration is greater than or equal to a first delay threshold after generating the first live data of a first preset duration , and a second buffered duration is greater than or equal to a second delay threshold after continuing to generate second live data of a second preset duration; where the first delay threshold is less than the second delay threshold, the second buffered duration is a difference between a second current time and a time when second current buffered data is written into the buffer, the second current buffered data is live data remaining when transmitting third live data to the receiving end device based on the first transmission data rate, and the third live data includes the second live data and the first current buffered data.

In an embodiment, the bit rate adjustment apparatus further includes:
a first adjusting unit, configured to decrease the first target bit rate to obtain a second target bit rate in case that a second preset condition is met;
where the second preset condition includes any of the following:
   a third buffered duration is greater than or equal to a second preset threshold; the second preset threshold is used to characterize a duration of severe network congestion, the third buffered duration is a difference between a third current time and a time when third current buffered data is written into the buffer, and the third current buffered data is live data remaining when transmitting the second current buffered data to the receiving end device based on the first transmission data rate; or
   a third buffered duration is less than the second preset threshold, the third buffered duration is greater than or equal to the second delay threshold, and after continuing to generate fourth live data of a third preset duration, a consumption speed of remaining buffered data in the buffer is less than a preset speed; the remaining buffered data is live data remaining when transmitting the fourth live data and historical buffered live data in the buffer to the receiving end device; where the second target bit rate is used to generate new live data.

In an embodiment, the bit rate adjustment apparatus further includes:
a second adjusting unit, configured to decrease the current bit rate to obtain a third target bit rate in case that the dynamic average generation data rate is greater than the second preset number of times the first transmission data rate; where the third target bit rate is used to generate new live data.

In an embodiment, the bit rate adjustment apparatus further includes:
a second obtaining unit, configured to obtain a second transmission data rate transmitted by the receiving end device in case of a static picture; where the second transmission data rate is determined by the receiving end device based on data volume of a received current static picture I-frame and a second receiving duration corresponding to the current static picture I-frame;
a third determining unit, configured to determine a static average generation data rate based on the data volume of the static picture I-frame and data volume of a static picture P-frame; and
a fourth determining unit, configured to determine a fourth target bit rate based on the second transmission data rate and the static average generation data rate; where the fourth target bit rate is used to generate new live data.

In an embodiment, the fourth determining unit is configured to:
decrease the current bit rate to obtain the fourth target bit rate in case that the static average generation data rate is greater than the second transmission data rate.

In an embodiment, the bit rate adjustment apparatus further includes:
a fifth determining unit, configured to determine a target buffered duration based on a generation data rate of the static picture I-frame, a generation data rate of the static picture P-frame, and the second transmission data rate, in case that the static average generation data rate is less than or equal to the second transmission data rate, and the generation data rate of the static picture I-frame is greater than the second transmission data rate; and
a transmitting unit, configured to transmit the target buffered duration to the receiving end device; where the target buffered duration is used to indicate the receiving end device to buffer live data within the target buffered duration.

In an embodiment, the fourth determining unit is configured to:
increase the current bit rate to obtain the fourth target bit rate in case that a third preset condition is met;
where the third preset condition includes any of the following:
   a generation data rate of the static picture I-frame is less than or equal to the second transmission data rate; or
   a generation data rate of the static picture I-frame is less than or equal to the second transmission data rate, and a difference between a current time and a time of a last decrease in bit rate is greater than a first preset threshold.

In an embodiment, the bit rate adjustment apparatus further includes:
a sixth determining unit, configured to determine a bit rate corresponding to a last stream-closing time as the current bit rate in case that a difference between a current stream-opening time and the last stream-closing time is less than a historical record valid duration.

FIG. 7 is a schematic physical structural diagram of an electronic device according to an embodiment of the present application. As shown in FIG. 7, the electronic device may include: a processor 710, a communications interface 720, a memory 730, and a communication bus 740, where the processor 710, the communications interface 720, and the memory 730 communicate with each other through the communication bus 740. The processor 710 calls logical instructions in the memory 730 to execute the bit rate adjustment methods, and the method includes: obtaining a first transmission data rate transmitted by a receiving end device in case of a dynamic picture; where the first transmission data rate is determined by the receiving end device based on data volume of a received current dynamic picture I-frame and a first receiving duration corresponding to the current dynamic picture I-frame;
determining a dynamic average generation data rate based on the data volume of the dynamic picture I-frame and data volume of a first preset number of dynamic picture P-frames following the current dynamic picture I-frame; and
determining a first target bit rate based on a first buffered duration, in case that the dynamic average generation data rate is less than or equal to a second preset number of times the first transmission data rate; where the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

Furthermore, the logical instructions in the memory 730 may be implemented as software functional units and, when sold or used as independent products, may be stored in a computer-readable storage medium. Based on this understanding, the technical solution of the present application, in essence, or the part that contributes to the prior art, or a part of the technical solution, may be embodied in the form of a software product. The computer software product is stored in a storage medium and includes several instructions to cause a computer device (which may be a personal computer, server, or network device, etc.) to execute all or part of the steps of the methods described in each embodiment of the present application. The storage medium includes various media capable of storing program code, such as USB drives, portable hard drives, read-only memory (ROM), random access memory (RAM), magnetic disks, or optical disks.

A computer program product is also provided according to the present application, including a computer program, storing on a non-transient computer-readable storage medium. The computer is able to execute the bit rate adjustment methods provided by each of the above methods when the computer program is executed by a processor. The method includes: obtaining a first transmission data rate transmitted by a receiving end device in case of a dynamic picture; where the first transmission data rate is determined by the receiving end device based on data volume of a received current dynamic picture I-frame and a first receiving duration corresponding to the current dynamic picture I-frame;
determining a dynamic average generation data rate based on the data volume of the dynamic picture I-frame and data volume of a first preset number of dynamic picture P-frames following the current dynamic picture I-frame; and
determining a first target bit rate based on a first buffered duration, in case that the dynamic average generation data rate is less than or equal to a second preset number of times the first transmission data rate; where the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

A computer-readable storage medium is also provided according to the present application, storing a computer program, and the computer program implements any of bit rate adjustment methods described above when executed by a processor. The method includes: obtaining a first transmission data rate transmitted by a receiving end device in case of a dynamic picture; where the first transmission data rate is determined by the receiving end device based on data volume of a received current dynamic picture I-frame and a first receiving duration corresponding to the current dynamic picture I-frame;
determining a dynamic average generation data rate based on the data volume of the dynamic picture I-frame and data volume of a first preset number of dynamic picture P-frames following the current dynamic picture I-frame; and
determining a first target bit rate based on a first buffered duration, in case that the dynamic average generation data rate is less than or equal to a second preset number of times the first transmission data rate; where the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

The embodiments for apparatus described above are merely illustrative. The units described as separate components may or may not be physically separate, and the components shown as units may or may not be physical units, i.e., they may be located in one place or distributed across multiple network units. Some or all of the modules can be selected according to actual needs to achieve the purpose of this embodiment. Those skilled in the art can understand and implement this without any creative effort.

Through the description of the above embodiments, those skilled in the art can clearly understand that each embodiment may be implemented by means of software plus a necessary universal hardware platform, and of course, may also be implemented by means of hardware. Based on such understanding, the above technical solution essentially or a part contributing to the prior art may be embodied in the form of a software product, and the computer software product may be stored in a non-transient computer-readable storage medium, such as a ROM/RAM, a magnetic disk, an optical disk, etc. and includes several instructions for enabling a computer device (which may be a personal computer, a server, or a network device, etc.) to perform the method described in each embodiment or some parts of the embodiments

Finally, it should be noted that the above embodiments are only used to illustrate the technical solutions of the present application and are not limited thereto. Although the present application is described in detail with reference to the foregoing embodiments, those skilled in the art should understand that: modifications may still be made to the technical solutions described in each of the foregoing embodiments, or equivalent substitutions may be made to some of the technical features; and these modifications or substitutions do not cause the essence of the corresponding technical solutions to deviate from the scope of the technical solutions of each embodiment of the present application.

## Claims

1. A bit rate adjustment method, comprising:
obtaining a first transmission data rate transmitted by a receiving end device in case of a dynamic picture; wherein the first transmission data rate is determined by the receiving end device based on data volume of a received current dynamic picture I-frame and a first receiving duration corresponding to the current dynamic picture I-frame;
determining a dynamic average generation data rate based on the data volume of the dynamic picture I-frame and data volume of a first preset number of dynamic picture P-frames following the current dynamic picture I-frame; and
determining a first target bit rate based on a first buffered duration, in case that the dynamic average generation data rate is less than or equal to a second preset number of times the first transmission data rate; wherein the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

2. The method of claim 1, wherein determining the first target bit rate based on the first buffered duration comprises:
increasing the current bit rate to obtain the first target bit rate in case that a first preset condition is met;
wherein the first preset condition comprises any of the following:
after generating the first live data of a first preset duration, the first buffered duration is less than a first delay threshold;
after generating the first live data of a first preset duration, the first buffered duration is less than a first delay threshold, and a difference between a current time and a time of a last decrease in bit rate is greater than a first preset threshold; the first preset threshold is used to characterize a duration for suppressing oscillatory switching of gears;
after generating the first live data of a first preset duration, the first buffered duration is greater than or equal to a first delay threshold, and after continuing to generate second live data of a second preset duration, a second buffered duration is less than a second delay threshold; wherein the first delay threshold is less than the second delay threshold, the second buffered duration is a difference between a second current time and a time when second current buffered data is written into the buffer, the second current buffered data is live data remaining when transmitting third live data to the receiving end device based on the first transmission data rate, and the third live data comprises the second live data and the first current buffered data; or
after generating the first live data of a first preset duration, the first buffered duration is greater than or equal to a first delay threshold, and after continuing to generate second live data of a second preset duration, a second buffered duration is less than a second delay threshold, and a difference between the current time and a time of a last decrease in bit rate is greater than the first preset threshold.

3. The method of claim 1, wherein determining the first target bit rate based on the first buffered duration further comprises:
decreasing the current bit rate to obtain the first target bit rate in case that the first buffered duration is greater than or equal to a first delay threshold after generating the first live data of a first preset duration, and a second buffered duration is greater than or equal to a second delay threshold after continuing to generate second live data of a second preset duration; wherein the first delay threshold is less than the second delay threshold, the second buffered duration is a difference between a second current time and a time when second current buffered data is written into the buffer, the second current buffered data is live data remaining when transmitting third live data to the receiving end device based on the first transmission data rate, and the third live data comprises the second live data and the first current buffered data.

4. The method of claim 3, wherein after decreasing the current bit rate to obtain the first target bit rate, the method further comprises:
decreasing the first target bit rate to obtain a second target bit rate in case that a second preset condition is met;
wherein the second preset condition comprises any of the following:
a third buffered duration is greater than or equal to a second preset threshold; the second preset threshold is used to characterize a duration of severe network congestion, the third buffered duration is a difference between a third current time and a time when third current buffered data is written into the buffer, and the third current buffered data is live data remaining when transmitting the second current buffered data to the receiving end device based on the first transmission data rate; or
a third buffered duration is less than the second preset threshold, the third buffered duration is greater than or equal to the second delay threshold, and after continuing to generate fourth live data of a third preset duration, a consumption speed of remaining buffered data in the buffer is less than a preset speed; the remaining buffered data is live data remaining when transmitting the fourth live data and historical buffered live data in the buffer to the receiving end device; wherein the second target bit rate is used to generate new live data.

5. The method of claim 1, wherein the method further comprises:
decreasing the current bit rate to obtain a third target bit rate in case that the dynamic average generation data rate is greater than the second preset number of times the first transmission data rate; wherein the third target bit rate is used to generate new live data.

6. The method of claim 1, wherein the method further comprises:
obtaining a second transmission data rate transmitted by the receiving end device in case of a static picture; wherein the second transmission data rate is determined by the receiving end device based on data volume of a received current static picture I-frame and a second receiving duration corresponding to the current static picture I-frame;
determining a static average generation data rate based on the data volume of the static picture I-frame and data volume of a static picture P-frame; and
determining a fourth target bit rate based on the second transmission data rate and the static average generation data rate; wherein the fourth target bit rate is used to generate new live data.

7. The method of claim 6, wherein determining the fourth target bit rate based on the second transmission data rate and the static average generation data rate comprises:
decreasing the current bit rate to obtain the fourth target bit rate in case that the static average generation data rate is greater than the second transmission data rate.

8. The method of claim 6, wherein the method further comprises:
determining a target buffered duration based on a generation data rate of the static picture I-frame, a generation data rate of the static picture P-frame, and the second transmission data rate, in case that the static average generation data rate is less than or equal to the second transmission data rate, and the generation data rate of the static picture I-frame is greater than the second transmission data rate; and
transmitting the target buffered duration to the receiving end device; wherein the target buffered duration is used to indicate the receiving end device to buffer live data within the target buffered duration.

9. The method of claim 6, wherein the method further comprises:
increasing the current bit rate to obtain the fourth target bit rate in case that a third preset condition is met;
wherein the third preset condition comprises any of the following:
a generation data rate of the static picture I-frame is less than or equal to the second transmission data rate; or
a generation data rate of the static picture I-frame is less than or equal to the second transmission data rate, and a difference between a current time and a time of a last decrease in bit rate is greater than a first preset threshold.

10. The bit rate adjustment method of any of claims 1 to 9, wherein the method further comprises:
determining a bit rate corresponding to a last stream-closing time as the current bit rate in case that a difference between a current stream-opening time and the last stream-closing time is less than a historical record valid duration.

11. A bit rate adjustment apparatus, comprising:
a first obtaining unit, configured to obtain a first transmission data rate transmitted by a receiving end device in case of a dynamic picture; wherein the first transmission data rate is determined by the receiving end device based on data volume of a received current dynamic picture I-frame and a first receiving duration corresponding to the current dynamic picture I-frame;
a first determining unit, configured to determine a dynamic average generation data rate based on the data volume of the dynamic picture I-frame and data volume of a first preset number of dynamic picture P-frames following the current dynamic picture I-frame; and
a second determining unit, configured to determine a first target bit rate based on a first buffered duration, in case that the dynamic average generation data rate is less than or equal to a second preset number of times the first transmission data rate; wherein the first buffered duration is a difference between a first current time and a time when first current buffered data is written into a buffer; the first current buffered data is live data remaining when transmitting first live data generated based on a current bit rate to the receiving end device based on the first transmission data rate; and the first target bit rate is used to generate new live data.

12. An electronic device comprising a memory, a processor, and a computer program stored in the memory and executable in the processor, wherein the processor implements the bit rate adjustment methods of any of claims 1 to 10 when executing the computer program.

13. A computer-readable storage medium storing a computer program, wherein the computer program implements the bit rate adjustment methods of any of claims 1 to 10 when executed by a processor.
